# EUROPÄISCHE PATENTSCHRIFT

(11) **EP 1 164 082 B1**
(45) Veröffentlichungstag und Bekanntmachung des Hinweises auf die Patenterteilung: **31.07.2002**
(21) Anmeldenummer: 01108980.2
(22) Anmeldetag: 11.04.2001
(51) Int. Cl.: B65C 3/06, B29C 63/42

(54) **Vorrichtung zum Aufschieben von Etikettenhülsen auf Gefässe**
Device for sliding sleeve labels on containers
Dispositif pour glisser des manchons d'étiquettes sur des récipients

(30) Priorität: 17.06.2000 DE 20010837 U
(43) Veröffentlichungstag der Anmeldung: 19.12.2001
(73) Patentinhaber: KRONES AG, 93068 Neutraubling (DE)
(72) Erfinder: Eiban, Günther, 93053 Regensburg (DE); Seidl, Ernst, 93095 Hagelstadt (DE)

(56) Entgegenhaltungen:
- DE-A- 19 547 697
- DE-A- 19 716 079
- US-A- 4 237 675

## Beschreibung

Die Erfindung betrifft eine Vorrichtung zum Aufschieben von Etikettenhülsen auf Gefäße wie Flaschen oder dgl. gemäß dem Oberbegriff des Anspruchs 1.

Aus US 4 237 675 ist eine Vorrichtung zum axialen Aufschieben von Etikettenhülsen (Sleeves) aus wärmeschrumpffähigem Kunststofffolienmaterial bekannt. Mit Hilfe einer längs zur Flaschenhochachse gesteuert verfahrbaren Lochscheibe wird die beim Einlauf in die Vorrichtung zunächst nur provisorisch von oben auf die Flaschenschulter aufgesteckte Etikettenhülse in die gewünschte Endlage axial verschoben. Wenn in dieser Endlage der obere Rand der Etikettenhülse nur einen geringen radialen Zwischenabstand zu der nach ihnen eingezogen geformten Schulter der Flaschenaußenwand besitzt, kann der Innendurchmesser der Lochscheibe nur geringfügig kleiner als der Durchmesser der Etikettenhülse gewählt werden, damit die Lochscheibe die Flaschenwandung nicht berührt. Problematisch ist dabei, dass vor allem in der Anfangsphase der Aufschiebebewegung der Etikettenhülse deren oberer Rand aufgrund der geringen Materialdicke sehr instabil ist. Somit besteht die Gefahr, dass der Etikettenrand bei einer axial gerichteten Kraftbeaufschlagung radial nach innen einknickt und im weiteren Verlauf in die Öffnung der Lochscheibe eintaucht, d.h. ab diesem Augenblick findet keine weitere Axialverschiebung der Etikettenhülse mehr statt.

DE 195 47 697 offenbart eine Vorrichtung gemäß dem Oberbegriff des Anspruchs 1, welche eine Etikettenhülse auf eine Flasche aufschiebt. Dabei wird der Etikettenträger über der Flasche positioniert und das Etikett durch Abwärtsbewegung eines Schiebers auf die Flasche aufgebracht.

Der Erfindung liegt die Aufgabe zugrunde, eine Vorrichtung zum Aufschieben von Etikettenhülsen auf Gefäße wie Flaschen oder dgl. anzugeben, die eine erhöhte Funktionssicherheit aufweist.

Die Aufgabe wird durch die kennzeichnenden Merkmale des Anspruchs 1 gelöst.

Aus der erfindungsgemäßen Lösung ergibt sich der Vorteil, dass gerade zu Beginn der Aufschiebebewegung, wenn aufgrund der langen Knicklänge der in dieser Phase noch weitgehend freistehenden Etikettenhülse die Einknickgefahr am größten ist, ein Durchrutschen des oberen Etikettenrandes in den freien Lochquerschnitt des Etikettenschiebers wirkungsvoll verhindert wird. Im Zuge der Aufschiebebewegung verkürzt sich die freie Knicklänge kontinuierlich durch die zunehmende Flaschenwandabstützung an der radial inneren Seite, wodurch auch die Gefahr des radialen Einknickens des oberen Etikettenrandes stetig abnimmt.

Gemäß einer Weiterbildung der Erfindung ist es vorteilhaft, eine Flasche während des axialen Aufschiebens einer Etikettenhülse mit ihrem Boden auf einer Standfläche stehend, vorzugsweise axial zwischen ihrem Boden und Kopfbereich eingespannt, zu halten.

Gemäß einer weiteren Ausgestaltung der Erfindung ist es vorteilhaft, zu Beginn der Aufschiebebewegung die Etikettenhülsenschieber nach einer kurzen Abwärtsbewegung wieder in die umgekehrte Richtung nach oben anzuheben und danach erneut eine abwärts gerichtete Aufschiebebewegung -nun bis zur Endlage- durchzuführen. Durch diese Maßnahme wird eine Vorausrichtung (Zentrierung) der zu Beginn mit ihrem unteren Rand nur lose auf die Flaschen aufgesteckten Etikettenhülsen erreicht, was insbesondere bei schräg sitzenden Etikettenhülsen von Vorteil ist.

Weitere günstige Ausgestaltungen der Erfindung sind in den verbleibenden Unteransprüchen angegeben.

Nachfolgend werden bevorzugte Ausführungsbeispiele anhand der Fig. beschrieben. Es zeigt:
- Fig. 1: eine Draufsicht auf eine Maschine zum Aufschieben von Etikettenhülsen auf Flaschen in einer schematischen Darstellung,
- Fig. 2: einen Vertikalschnitt entlang der Linie I-I in Fig. 1,
- Fig. 3: eine Abwicklung der Steuerkurve aus Fig. 2,
- Fig. 4: eine schematische Draufsicht auf eine Maschine gemäß einer zweiten Ausführungsform und
- Fig. 5: einen Vertikalschnitt entlang der Linie II-II in Fig.4.

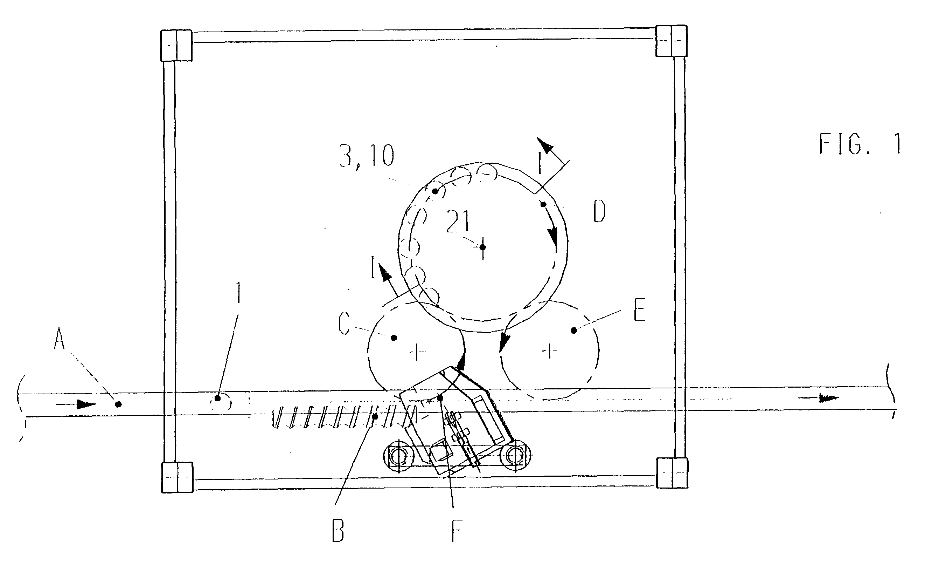

Die Figur 1 zeigt eine kontinuierlich arbeitende Maschine in Rundläuferbauart, die im Wesentlichen aus einem Förderer A zum Zu- und Abführen von Flaschen 1, einer Einteilschnecke B, einem Einlaufsternrad C, einem Karussell D, einem Auslaufsternrad E, sowie einem über dem Einlaufsternrad C angeordneten Etikettenschlauchschneidaggregat F besteht. Die zuvor genannten Bauteile zum Transportieren der Flaschen 1 werden den Bewegungspfeilen entsprechend geschwindigkeits- und stellungssynchron zueinander kontinuierlich angetrieben.

Sowohl das Einlaufsternrad C als auch das Auslaufsternrad E können in nicht näher dargestellter Weise mit steuerbaren Greiforganen zum Erfassen und Freigeben von Flaschen 1 an ihrem Rumpf- und/oder Halsbereich ausgerüstet sein. Entsprechende Sternradkonstruktionen sind aus US 5607045 bekannt.

Der Aufbau eines Etikettenschlauchschneidaggregats F kann beispielsweise entsprechend DE-OS 2950785 ausgeführt sein.

Das Karussell D besitzt über seinen Umfang mit gleichmäßigen Zwischenabständen auf einem gemeinsamen Teilkreis verteilte Flaschenteller 10 mit koaxial darüber angeordneten, gesteuert heb- und senkbaren Schieberanordnungen 3. Das Karussell D ist um eine vertikale Drehachse 21 kontinuierlich umlaufend antreibbar gelagert.

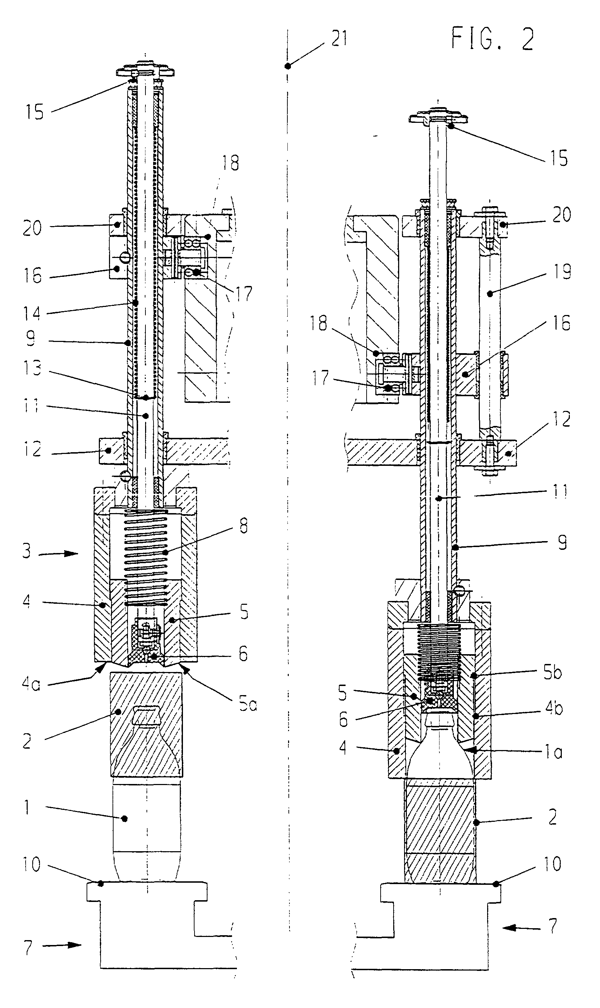

Aus Fig. 2 ist der konstruktive Aufbau des Karussells D im Einzelnen erkennbar. Es besteht im Wesentlichen aus einem die Flaschenteller 10 tragenden Drehtisch 7, einer mit Abstand darüber angeordneten, zu den Flaschentellern 10 fluchtend ausgerichteten, Bohrungen aufweisenden Scheibe 12 und einem wiederum mit Abstand darüber positionierten Ring 20, der ebenfalls mit zu den Flaschentellern 10 fluchtenden Bohrungen versehen ist. Alle drei Bauteile 7, 12 und 20 sind verdrehfest gekoppelt und um die vertikale Maschinenachse 21 drehbar gelagert. Die paarweise fluchtenden Bohrungen in der Scheibe 12 und dem Ring 20 werden jeweils von einem vertikal verschiebbar geführten Rohr 9 durchgriffen, an dem ein Rollenhalter 16 angeklemmt ist, der an seiner zur Drehachse 21 weisenden Seite eine frei drehbar gelagerte Kurvenrolle 17 trägt. Diese Kurvenrolle 17 greift in die Nut einer verdrehfest gehaltenen Steuerkurve 18 ein. Zur Verdrehsicherung des Rollenhalters 16 ist dieser an einer vertikalen Führungsstange 19 geführt, die in der rechten Hälfte der Figur 2 aus der Normallage um 90° nach außen gedreht dargestellt ist und sich normalerweise in Umlaufrichtung gesehen hinter dem Rohr 9 in Parallelausrichtung zu diesem befindet.

Im Rohr 9 ist eine koaxial verschiebbare Stange 11 geführt, die sowohl am oberen als auch unteren Ende des Rohres 9 übersteht. An ihrem oberen Ende befindet sich ein Anschlag 15, während am unteren Ende eine frei drehbar gelagerte, lösbare Zentrierglocke 6 für einen Flaschenkopf befestigt ist. Auf der Stange 11 ist im Bereich zwischen dem oberen Ende des Rohres 9 und einem auf der Stange 11 befestigten Sicherungsring 13 eine lange Schraubenfeder 14 angeordnet. Durch diese Schraubenfeder 14 wird die Stange 11 permanent nach unten in Richtung zum Flaschenteller 10 kraftbeaufschlagt.

An dem zum Flaschenteller 10 weisenden Ende des Rohres 9 ist unterhalb der Scheibe 12 ein rohrartiger Lochschieber 4 festgeklemmt. In der zylindrischen Innenbohrung dieses ersten Lochschiebers ist ein zweiter Lochschieber 5 axial verschiebbar geführt, der durch eine sich am ersten Lochschieber 4 abstützende Druckfeder 8 permanent nach unten in Richtung zu einem im ersten Lochschieber 4 stufenartig eingeformten, als unterer Anschlag dienenden Absatz 4b beaufschlagt wird. Am zweiten Lochschieber 5 ist ebenfalls ein entsprechender, mit 4b in Anlage bringbarer Absatz 5b angeformt.

Während der erste, äußere Lochschieber 4 an seiner zum Flaschenteller 10 weisenden Seite eine plane, horizontal ausgerichtete Stirnfläche 4a aufweist, besitzt der innere, zweite Lochschieber 5 eine Außenkegelfläche 5a. Der Innendurchmesser der Stirnseite des ersten Lochschiebers 4 und der Außendurchmesser des zweiten Lochschiebers 5 besitzen ein geringeres Maß als der Durchmesser einer Etikettenhülse 2. Der Durchmesser ist so gewählt, dass der erste Lochschieber 4 bei Erreichen der gewünschten Endlage der Etikettenhülse 2 auf einer Flasche 1 nicht an der Außenseite der Flasche anliegt, damit sich diese nicht im Lochschieber 4 verklemmen kann.

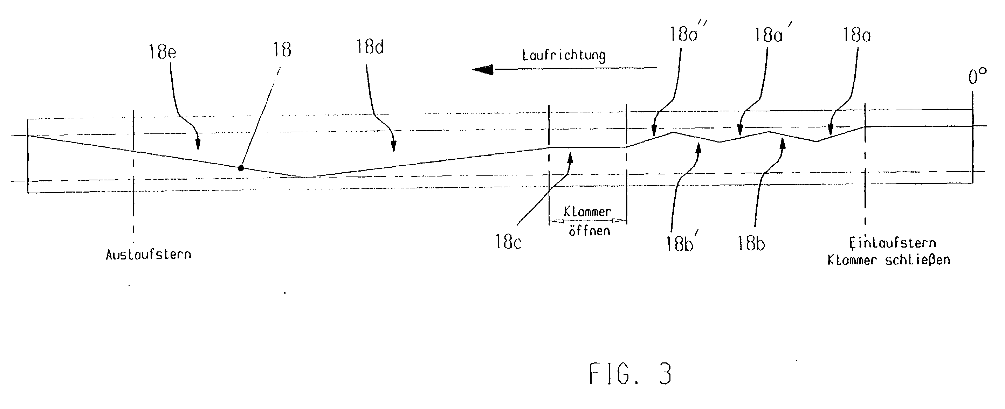

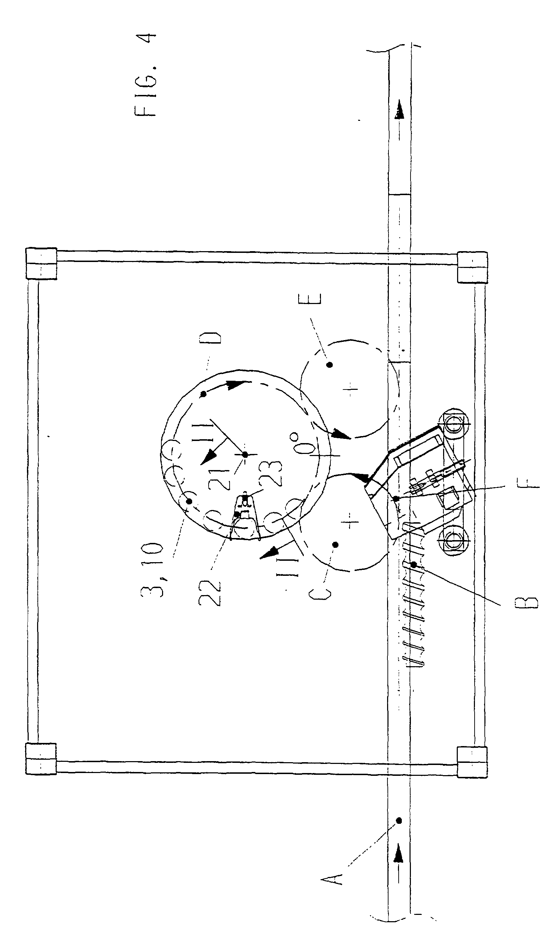

Fig. 3 zeigt die Abwicklung der zur Steuerung der Höhenlage der Schieberanordnungen 3 dienenden Steuerkurve 18. Ihre Null-Grad-Stellung ist in Fig. 4 markiert und liegt mittig im Bereich zwischen dem Auslaufstenrad E und dem Einlaufsternrad C.

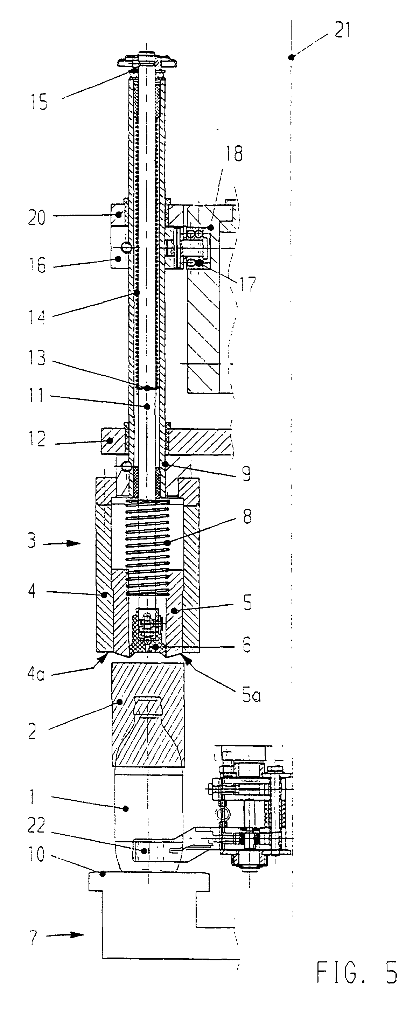

Gemäß den Fig. 4 und 5 kann jedem Flaschenteller 10 eine an seiner radial inneren Seite auf dem Drehtisch 7 mitumlaufende, steuerbare Greifklammer 22 für die Flaschen 1 zugeordnet sein, die durch ein Paar gegensinnig schwenkbare Arme gebildet wird. Zwischen den Armen befindet sich ein Steuernocken 23 zum gezielten Zusammen- oder Auseinanderschwenken der Arme, um eine Flasche im bodennahen Bereich am Rumpf zu erfassen oder freizugeben. Die Details betreffend wird wiederum auf US 5 607 045 hingewiesen.

Der Einsatz von Greifklammern 22 ist dann von Vorteil, wenn die Umlaufgeschwindigkeit der Flaschen auf dem Drehtisch 7 so hoch ist, dass bei freistehendem Flaschentransport die Flaschen zu rutschen oder kippen beginnen würden. Dadurch erhöht sich die Betriebssicherheit auch bei einem eventuellen Notstopp der Maschine.

Nachfolgend wird der Verfahrensablauf in Verbindung mit den Figuren beschrieben:

Auf dem Förderer A einlaufseitig zugeführte Flaschen 1 werden von der Einteilschnecke B erfasst, auf die Maschinenteilung auseinandergezogen und an das Einlaufsternrad C übergeben. Das Einlaufsternrad C führt die Flaschen unter dem stationär angeordneten Etikettenschlauchschneidaggregat F vorbei, wobei in diesem Augenblick eine Durchmesserübermaß aufweisende Etikettenhülse 2 von einem vorgefalteten Etikettenschlauch abgetrennt und mit ihrem unteren Rand teilweise auf die Flaschenschulter 1a aufgesteckt wird (vergleichbar mit Figur 2, linke Hälfte). Nach dem Überführen der Flasche 1 auf einen Flaschenteller 10 des Drehtisches 7 wird die Flasche bei einer entsprechend der Figur 4 ausgeführten Maschine unmittelbar nach dem Übergeben durch das Einlaufsternrad 7 von einer Greifklammer 22 im bodennahen Bereich ihrer Mantelfläche erfasst. Dies geschieht durch Betätigung des um eine vertikale Achse schwenkbaren Steuernockens 23. Im Anschluß daran wird die gesamte Schieberanordnung 3 beim Durchfahren eines Kurvenabschnitts 18a der Steuerkurve 18 zunächst teilweise nach unten in Richtung zur Flasche 1 abgesenkt und anschließend im Kurvenbereich 18b wieder angehoben. Während der Absenkbewegung berührt die Stirnfläche 4a und ggf. die Außenkegelfläche 5a des Lochschiebers 4 bzw. 5 kurzzeitig den oberen Rand der Etikettenhülse 2, um diese zu zentrieren und teilweise axial nach unten zu verschieben. Dieser Vorgang wiederholt sich noch zweimal beim Durchfahren der Kurvenabschnitte 18a`, 18b` und 18` `. Am Ende des Kurvenabschnitts 18a` ` liegt die Zentrierglocke 6 an der oberen Stirnfläche der Flasche 1 an, so dass die Flasche im weiteren Verlauf zwischen der Zentrierglocke und dem Flaschenteller 10 axial eingespannt ist. Während dem Durchfahren des nächsten Kurvenabschnitts 18c werden bei einer mit Greifklammern 22 ausgestatteten Maschine (Ausführung nach Fig.4 und 5) die Greifklammern gespreizt, so dass sie nicht mehr an der Mantelfläche der Flasche 1 anliegen. Beim Passieren des darauffolgenden Kurvenabschnitts 18d wird die Schieberanordnung 3 von der nach unten gesteuerten Kurvenrolle 17 abgesenkt, wobei die Abwärtsbewegung des zweiten Lochschiebers 5 beim Auftreffen auf die radial einwärts geneigte Flaschenschulter 1a gestoppt wird. Der äußere, erste Lochschieber 4 gleitet dagegen weiter abwärts bis zum Erreichen seiner tiefsten, die Hafthöhe der Etikettenhülse 2 auf der Flasche 1 bestimmenden Position (Figur 2, rechte Bildhälfte). Der sich anschließende, nach oben ansteigende Kurvenabschnitt 18e ist so gestaltet, dass bei Erreichen des Übergabepunkts zum Auslaufsternrad E das obere Ende des Rohres 9 mit dem Anschlag 15 zur Anlage gelangt, wobei die Zentrierglocke 6 mittels der Stange 11 vom Flaschenkopf abgehoben wird.

## Patentansprüche

1. Vorrichtung zum Aufschieben von Etikettenhülsen (2) auf Gefäße (1) wie Flaschen oder dgl. mit einem koaxial zu einem eine teilweise aufgesteckte Etikettenhülse tragenden Gefäß positionierten, axial zur Längsachse des Gefäßes gesteuert vor- und zurückfahrbaren Lochschieber (4), dessen Innendurchmesser zumindest geringfügig kleiner ist als der Durchmesser der Etikettenhülse (2), **dadurch gekennzeichnet, dass** koaxial zum Lochschieber (4) ein zweiter, innenliegender Schieber (5) angeordnet ist, der relativ zum ersten Lochschieber (4) derart axial verschiebbar geführt ist, dass sein zur Etikettenhülse weisendes Ende zu Beginn der Aufschiebebewegung ein Durchrutschen des oberen Etikettenrandes in den freien Lochquerschnitt des Lochschiebers (4) bis zu seinem Auftreffen auf dem Gefäß verhindert.

2. Vorrichtung nach Anspruch 1, **dadurch gekennzeichnet, dass** der zweite Schieber (5) ebenfalls als ein Lochschieber ausgebildet und teleskopartig im ersten Lochschieber (4) geführt ist.

3. Vorrichtung nach Anspruch 1 oder 2, **dadurch gekennzeichnet, dass** der zweite Lochschieber (5) an seinem zur Etikettenhülse (2) weisenden Ende eine außenkegelförmige Stirnfläche (5a) aufweist.

4. Vorrichtung nach einem der vorhergehenden Ansprüche 1 bis 3, **dadurch gekennzeichnet, dass** im zweiten Lochschieber (5) eine konzentrisch angeordnete Zentrierglocke (6) für den Kopf eines Gefäßes (1) vorhanden ist, die koaxial zum ersten (4) und zweiten Lochschieber (5) relativ verfahrbar geführt ist.

5. Vorrichtung nach Anspruch 4, **dadurch gekennzeichnet, dass** der erste Lochschieber (4), der zweite Lochschieber (5) und die Zentrierglocke (6) durch nur eine Steuerkurve (18) relativ zu einem Gefäß (1) vor- und zurückstellbar ist.

6. Vorrichtung nach Anspruch 5, **dadurch gekennzeichnet, dass** dem zweiten Lochschieber (5) und der Zentrierglocke (6) jeweils ein selbsttätiges Rückstellelement (8, 14) zugeordnet ist.

7. Vorrichtung nach Anspruch 5 oder 6, **dadurch gekennzeichnet, dass** die Steuerkurve (18) wenigstens je einen die Lochschieber (4, 5) und Zentrierglocke (6) nur teilweise relativ zu einem Gefäß (1) absenkende und wieder anhebende Kurvenabschnitte (18a, 18b, 18a`, 18b`, 18a` `) aufweist.

8. Vorrichtung nach wenigstens einem der vorhergehenden Ansprüche 1 bis 7, **dadurch gekennzeichnet, dass** den Lochschiebern (4, 5) und der Zentrierglocke (6) wenigstens eine steuerbare Greifeinrichung (22) zum Halten eines Gefäßes (1) an seinem Mantelbereich, insbesondere nahe am Boden, zugeordnet ist.

9. Vorrichtung nach Anspruch 8, **dadurch gekennzeichnet, dass** die Steuerkurve (18) einen Kurvenabschnitt (18c) aufweist, in dem die Zentrierglocke (6) an einem Gefäß (1) anliegt und sich der untere Rand einer über das Gefäß gestülpten Etikettenhülse (2) nahe oberhalb der Greifeinrichtung (22) befindet.

10. Vorrichtung nach wenigstens einem der vorhergehenden Ansprüche 1 bis 9, **dadurch gekennzeichnet, dass** das Gefäß (1) während des Aufschiebens der Etikettenhülse (2) durch die Lochschieber (4, 5) durch eine seinen Boden unterstützende Standfläche (10) getragen wird.

11. Vorrichtung nach wenigstens einem der vorhergehenden Ansprüche 1 bis 10, **dadurch gekennzeichnet, dass** jeweils ein erster Lochschieber (4), ein zweiter Lochschieber (5) und eine Zentrierglocke (6) eine einer Standfläche (10) zugeordnete Schieberanordnung (3) bilden und mehrere Schieberanordnungen (3) mit zugeordneten Standflächen (10) mit gleichmäßigen Zwischenabständen auf einem gemeinsamen Teilkreis eines kontinuierlich umlaufend antreibbaren Karussells angeordnet sind.

## Claims

1. A device for sliding sleeve labels (2) on to containers (1) such as bottles or the like, with a reciprocatable apertured slider (4) positioned coaxially with respect to a container carrying a sleeve label partially fitted over said container and guided axially with respect to the longitudinal axis of the container, the internal diameter of which apertured slider is smaller than the diameter of the sleeve label (2), **characterised in that** a second, inner slider (5) is arranged coaxially with respect to the apertured slider (4), which inner slider (5) is so axially displaceable in a guided manner with respect to the first apertured slider (4) that at the start of the movement for sliding on the sleeve label the end of said inner slider (5) facing towards the sleeve label prevents the upper edge of the label from slipping into the free apertured cross-section of the apertured slider (4) until said apertured slider (4) makes contact with the container.

2. A device according to Claim 1, **characterised in that** the second slider (5) is likewise formed as an apertured slider and is guided telescopically in the first apertured slider (4).

3. A device according to Claim 1 or 2, **characterised in that** the second apertured slider (5) has a male taper on its end face (5a) facing towards the sleeve label (2).

4. A device according to one of the preceding Claims 1 to 3, **characterised in that** a concentrically arranged centring bell (6) for centring the head of a container (1) is present in the second apertured slider (5), said centring bell (6) being coaxially displaceable with respect to the first (4) and second apertured slider (5) in a guided manner.

5. A device according to Claim 4, **characterised in that** the first apertured slider (4), the second apertured slider (5) and the centring bell (6) are reciprocatable with respect to a container (1) by means of a control cam (18).

6. A device according to Claim 5, **characterised in that** the second apertured slider (5) and the centring bell (6) each has allocated to it a self-actuating return element (8, 14).

7. A device according to Claim 5 or 6, **characterised in that** the control cam (18) has cam sections (18a, 18b, 18a', 18b', 18a") for partially lowering and then raising the apertured sliders (4,5) and the centring bell (6) with respect to a container it), at least one cam section (18a, 18b, 18a', 18b', 18a") being allocated to each of said apertured sliders (4, 5) and centring bell (6).

8. A device according to at least one of the preceding Claims 1 to 7, **characterised in that** at least one guidable gripping arrangement (22) for holding a container (1) by its jacket area, in particular near to the base, is allocated to the apertured sliders (4, 5) and the centring bell (6).

9. A device according to Claim 8, **characterised in that** the control cam (18) has a cam section (18c) in which the centring bell (6) abuts against a container (1) and the lower edge of a sleeve label (2) fitted over the container is located a short distance above the gripping arrangement (22).

10. A device according to at least one of the preceding Claims 1 to 9, **characterised in that** while the sleeve label (2) is being slid on, the container (1) is pushed through the apertured sliders (4, 5) by means of a support face (10) supporting its base.

11. A device according to at least one of the preceding Claims 1 to 10, **characterised in that** a first apertured slider (4), a second apertured slider (5) and a centring bell (6) form one slider arrangement (3) allocated to each support face (10), and a plurality of slider arrangements (3) with allocated support faces (10) is arranged at uniform intervals on a common segment of a carrousel drivable in a continuously circulating manner.

## Revendications

1. Dispositif pour glisser des manchons d'étiquettes (2) sur des récipients (1) tels que des bouteilles ou similaires, comportant un coulisseau alésé (4), positionné coaxialement à un récipient sur lequel un manchon d'étiquette est emmanché en partie, ce coulisseau (4) pouvant se déplacer en va-et-vient commandé selon l'axe longitudinal du récipient et présentant un diamètre intérieur au moins un peu plus petit que le diamètre de manchon d'étiquette (2),
**caractérisé en ce que**
coaxialement au coulisseau alésé (4) est monté dans celui-ci un second coulisseau (5), pouvant coulisser axialement par rapport au premier coulisseau (4) de manière que son extrémité située vers le manchon d'étiquette empêche, au début du mouvement de coulissement, le bord supérieur de l'étiquette de glisser dans la section libre de l'alésage du coulisseau (4), jusqu'à ce qu'il rencontre le récipient.

2. Dispositif selon la revendication 1,
**caractérisé en ce que**
le second coulisseau (5) est également un coulisseau alésé et peut glisser téléscopiquement dans le premier coulisseau (4).

3. Dispositif selon la revendication 1 ou 2,
**caractérisé en ce que**
le second coulisseau alésé (5) présente, à son extrémité située vers le manchon d'étiquette (2) une face frontale (5a) en forme de cône externe.

4. Dispositif selon l'une des revendications 1 à 3,
**caractérisé en ce que**
dans le second coulisseau alésé (5) est montée concentriquement pour la tête d'un récipient (1), une cloche de centrage (6) qui est coaxiale au premier coulisseau (4) et peut se déplacer par rapport au second coulisseau (5).

5. Dispositif selon la revendication 4,
**caractérisé en ce que**
le premier coulisseau (4), le second coulisseau (5) et la cloche de centrage (6) peuvent être déplacés en va-et-vient par rapport à un récipient (1) par l'action d'une seule piste de commande (18).

6. Dispositif selon la revendication 5,
**caractérisé en ce qu'**
au second coulisseau (5) et à la cloche de centrage (6) sont associés respectivement un élément de rappel automatique (8, 14).

7. Dispositif selon la revendication 5 ou 6,
**caractérisé en ce que**
la piste de commande (18) présente des sections de piste (18a, 18b, 18a', 18b') faisant monter et redescendre seulement en partie par rapport à un récipient (11), au moins un coulisseau alésé (4, 5) et la cloche de centrage (6).

8. Dispositif selon au moins une des revendications 1 à 7,
**caractérisé en ce qu'**
aux coulisseaux alésés (4, 5) et à la cloche de centrage (6) est associé au moins un dispositif de prise (22) commandable, servant à maintenir un récipient (1) par son enveloppe, en particulier près de son fond.

9. Dispositif selon la revendication 8,
**caractérisé en ce que**
la piste de commande (18) présente une section de piste (18c) ayant pour effet de mettre la cloche de centrage (6) en contact avec un récipient (1) et de placer le bord inférieur d'un manchon d'étiquette (2) emmanché sur le récipient au-dessus et près du dispositif de prise (22).

10. Dispositif selon au moins une des revendications 1 à 9,
**caractérisé en ce que**
le récipient (1), pendant que le manchon d'étiquette (2) glisse sur lui sous l'action des coulisseaux alésés (4, 5), est en appui sur une portée d'assise (10) soutenant son fond.

11. Dispositif selon au moins une des revendications 1 à 10,
**caractérisé en ce que**
chaque fois un premier coulisseau alésé (4), un second coulisseau alésé (5) et une cloche de centrage (6) constituent un système coulissant (3) associé à une portée d'assise (10), et plusieurs systèmes coulissants (3) avec les portées d'assise (10) associées sont disposés à des intervalles réguliers sur un arc de cercle commun d'un carrousel pouvant être entraîné en rotation continue.
